Europäisches Patentamt

European Patent Office

Office européen des brevets

(19)

(11) Veröffentlichungsnummer : **0 074 149**
**B1**

(12) **EUROPÄISCHE PATENTSCHRIFT**

(45) Veröffentlichungstag der Patentschrift :
06.07.88

(51) Int. Cl.⁴ : **G 11 B 15/66**

(21) Anmeldenummer : 82201085.6

(22) Anmeldetag : 06.09.82

(54) **Aufzeichnungs- und/oder Wiedergabegerät.**

(30) Priorität : 08.09.81 AT 3884/81
15.03.82 AT 1032/82

(43) Veröffentlichungstag der Anmeldung :
16.03.83 Patentblatt 83/11

(45) Bekanntmachung des Hinweises auf die Patenterteilung : 06.07.88 Patentblatt 88/27

(84) Benannte Vertragsstaaten :
AT BE DE FR GB IT NL

(56) Entgegenhaltungen :
EP-A- 0 024 361
US-A- 3 673 348
PATENTS ABSTRACTS OF JAPAN, Band 5, Nr. 134 (P-77)[806], 26. August 1981 & JP-A-5671849

(73) Patentinhaber : N.V. Philips' Gloeilampenfabrieken
Groenewoudseweg 1
NL-5621 BA Eindhoven (NL)

(72) Erfinder : Fleck, Harald
P/A INT.OCTROOIBUREAU B.V. Prof.Holstlaan 6
NL-5656 AA Eindhoven (NL)
Erfinder : Muller, Johannes C.A.
P/A INT.OCTROOIBUREAU B.V. Prof.Holstlaan 6
NL-5656 AA Eindhoven (NL)
Erfinder : Hütter, Heinrich
P/A INT.OCTROOIBUREAU B.V. Prof.Holstlaan 6
NL-5656 AA Eindhoven (NL)

(74) Vertreter : Van Weele, Paul Johannes Frits et al
INTERNATIONAAL OCTROOIBUREAU B.V. Prof. Holstlaan 6
NL-5656 AA Eindhoven (NL)

EP 0 074 149 B1

## Beschreibung

Die Erfindung betrifft ein Aufzeichnungs- und/oder Wiedergabegerät für einen bandförmigen Aufzeichnungsträger, der in einer Kassette untergebracht ist, die mindestens eine Öffnung zum Herausführen des Aufzeichnungsträgers aus derselben aufweist und die in das Gerät einsetzbar ist, das mit einer Bandführungstrommel um deren Mantelfläche der aus der Kassette herausgeführte Aufzeichnungsträger zumindest teilweise schlingbar ist, und mit einer zum Herausführen des Aufzeichnungsträgers aus der Kassette und zum Herumschlingen desselben um die Bandführungstrommel vorgesehenen Bandführungseinrichtung versehen ist, die zwei um zueinander parallele Schwenkachsen verschwenkbar gelagerte, sich in einem entsprechend ihrem Verschwenken sich ändernden Überdeckungsgebiet überdeckende hebel aufweist, die je mindestens eine zum Zusammenwirken mit dem Aufzeichnungsträger vorgesehene Bandführung tragen und die von einer Antriebseinrichtung her zwischen einer Ruhelage, in der die Bandführungen den in der Kassette untergebrachten Aufzeichnungsträger im Bereich von deren Öffnung hintergreifen, und einer Betriebslage, in der die Bandführungen den beim Verschwenken der Hebel von ihrer Ruhelage in ihre Betriebslage mitgenommenen Aufzeichnungsträger um die Bandführungstrommel herumgeschlungen halten, verschwenkbar sind und die zum Abstimmen ihrer Schwenkbewegungen aufeinander über eine unmittelbar an denselben angreifende Kopplungseinrichtung miteinander gekoppelt sind. Ein derartiges Gerät ist beispielsweise aus der AT-B-362 161 bekannt.

Das Abstimmen der Schwenkbewegungen der beiden Hebel aufeinander ist deshalb wichtig, weil die beiden Hebel und die auf denselben angeordneten Bandführungen mit einer möglichst gleichmässigen und aneinander angepassten Verstellbewegung zwischen ihrer Ruhelage und ihrer Betriebslage bewegt werden sollen, damit im Zuge ihrer Verstellung der Aufzeichnungsträger nicht in unerwünschter Weise belastet wird, und auch stets zugleich ihre Betriebslage bzw. ihre Ruhelage erreichen sollen, damit stets ein einwandfreier und ungestörter Betrieb gewährleistet ist. Hierfür sind bei dem aus der AT-B-362 161 bekannten Gerät die beiden Hebel mit einer durch ein Seil gebildeten Kopplungseinrichtung miteinander gekoppelt, wobei das Seil mit den beiden Hebeln an feststehenden Angriffsstellen verbunden ist. Eine solche Kopplungseinrichtung ergibt zufolge der konstanten Länge des Seiles und der feststehenden Angriffsstellen des Seiles an den beiden Hebeln in jeder Bewegungsphase der Verstellung der beiden Hebel das gleiche Bewegungsverhalten der Hebel gegenüber einander, wodurch eine beliebige Abstimmung ihrer Schwenkbewegungen aufeinander nicht möglich ist. Ausserdem ist die Montage eines solchen Seiles relativ aufwendig und Alterungserscheinungen desselben können sich ebenfalls ungünstig auf die Betriebssicherheit auswirken.

Die Erfindung hat sich zur Aufgabe gestellt, bei einem Aufzeichnungs- und/oder Wiedergabegerät der eingangs angeführten Art die Kopplungseinrichtung zwischen den beiden Hebeln für die Bandführungen besonders einfach und betriebssicher zu machen und sie so auszubilden, dass ein beliebiges Abstimmen der Schwenkbewegungen der beiden Hebel aufeinander in allen Bewegungsphasen möglich ist. Hierzu ist die Erfindung dadurch gekennzeichnet, dass die Kopplungseinrichtung durch eine Kulissensteuerung gebildet ist, die einen in Richtung der Schwenkachsen der beiden Hebel verlaufenden, im Bereich des jeweiligen Überdeckungsgebietes der beiden Hebel an denselben kraftschlüssig angreifenden Kulissenstein aufweist, mit dem eine quer zu den Schwenkachsen verstellbare Mitnehmereinrichtung kraftschlüssig zusammenwirkt, die ihn entlang einer durch das jeweilige Überdeckungsbebiet der beiden Hebel verlaufenden, von der Mitnehmereinrichtung festgelegten Bewegungsbahn mitnimmt, wobei das kraftschlüssige Angreifen des Kulissensteines an mindestens einem der beiden Hebel über eine an diesem Hebel vorgesehene, im Bereich des jeweiligen Überdeckungsgebietes verlaufende, zur Bewegungsbahn des Kulissensteines korrespondierende Kulissenfläche erfolgt, an der er, sich an derselben entlang bewegend, anliegend gehalten ist. Auf diese Weise wird eine einfache und betriebssichere Kopplung zwischen den beiden Hebeln erhalten, wobei durch den Verlauf der Bewegungsbahn des Kulissensteines und den Verlauf der Kulissenfläche, an der sich der Kulissenstein beim Verstellen der beiden Hebel entlang bewegt, eine beliebige Abstimmung der Schwenkbewegungen der beiden Hebel aufeinander möglich ist. Eine solche durch eine Kulissensteuerung gebildete Kopplungseinrichtung ist vorteilhafterweise auch sehr einfach und rasch montierbar.

Als vorteilhaft hat sich erwiesen, wenn die Mitnehmereinrichtung für den Kulissenstein durch ein gegenüber den beiden Hebeln verstellbares separates Stellglied gebildet ist, jeder der beiden Hebel eine Kulissenfläche aufweist, die sich im Bereich des jeweiligen Überdeckungsgebietes der beiden Hebel ebenfalls überdecken, und der Kulissenstein im Bereich dieses Überdeckungsgebietes an den beiden Kulissenflächen kraftschlüssig angreift. Durch das Vorsehen eines separaten Stellgliedes als Mitnehmereinrichtung für den Kulissenstein kann für denselben in relativ weiten Grenzen eine im Hinblick auf eine einwandfreie und ungestörte Kraftübertragung zwischen dem Kulissenstein und den beiden Kulissenflächen möglichst günstige und zweckmässige Bewegungsbahn festgelegt werden, wobei der Kulissenstein zufolge seiner Anordnung auf einem separaten Stellglied und seiner Relativbewegung gegenüber zwei Kulissenflächen gegenüber jeder der beiden Kulissenflächen beim Verstellen der Hebel nur eine räumlich kurze Relativbewegung ausführt, so dass die Kulissenflächen selbst kurz ausgebildet sein können, was im Hinblick auf den benötigten Raumbedarf und damit auf eine möglichst kompakte Ausbildung der Hebel vorteilhaft ist.

Das separate Stellglied kann beispielsweise als rotierend antreibbare Scheibe oder Ring ausgebildet sein. Als besonders vorteilhaft hat sich aber erwiesen, wenn das separate Stellglied für den Kulissenstein durch einen verschwenkbar gelagerten Arm gebildet ist. Hierdurch ist eine besonders einfache und raumsparende Ausbildung erreicht.

Hierbei hat sich ferner als vorteilhaft erwiesen, wenn der Arm in Richtung der Schwenkachsen gesehen zwischen den beiden Hebeln liegt und der Kulissenstein den Arm durchsetzt und mit jedem seiner beiden freien Enden an einer der beiden Kulissenflächen kraftschlüssig angreift. Auf diese Weise ist eine gleichmässige Belastung des als Stellgliedes vorgesehenen Armes und dessen Lagerung erreichbar, was im Hinblick auf ein einwandfreies Betriebsverhalten und eine lange Lebensdauer von Vorteil ist.

Als vorteilhaft hat sich auch erwiesen, wenn das separate Stellglied für den Kulissenstein durch einen entlang einer Führung verschiebbaren Gleitteil gebildet ist. Hierdurch ist eine sehr stabile Ausbildung erreicht.

Weiter hat sich als vorteilhaft erwiesen, wenn die Mitnehmereinrichtung für den Kulissenstein durch einen der beiden Hebel gebildet ist und der andere der beiden Hebel die Kulissenfläche aufweist, an welcher der Kulissenstein kraftschlüssig angreift. Dadurch, dass einer der beiden Hebel selbst zugleich als Mitnehmereinrichtung für den Kulissenstein ausgenützt ist, erübrigt sich ein separates Stellglied als Mitnehmereinrichtung und es ergibt sich ein besonders einfacher und raumsparender Aufbau.

Hinsichtlich einer sehr einfachen Ausführungsform hat sich als vorteilhaft erwiesen, wenn die Kulissenfläche an einer Seitenwand des betreffenden Hebels ausgebildet ist.

Als vorteilhaft hat sich aber auch erwiesen, wenn die Kulissenfläche durch einen in dem betreffenden Hebel vorgesehenen Schlitz gebildet ist, durch den der Kulissenstein hindurchgeführt ist. Hierdurch ist bei jeder Verstellung der beiden Hebel stets ein einwandfreies und sicheres Zusammenwirken des Kulissensteines mit den Kulissenflächen gewährleistet.

Als besonders vorteilhaft hat sich erwiesen, wenn die Mitnehmereinrichtung für den Kulissenstein durch beide Hebel gebildet ist, die beide zur Bildung je einer Kulissenfläche einen Schlitz aufweisen, und sich die beiden Schlitze im jeweiligen Überdeckungsgebiet der beiden Hebel ebenfalls überdecken und in diesem Überdeckungsgebiet den Kulissenstein schwimmend aufnehmen, wobei der Verlauf jedes Schlitzes im wesentlichen einem Abschnitt einer Kreisevolvente entspricht, deren Grundkreis zentrisch zu der Schwenkachse des betreffenden Hebels liegt, und sich die beiden Grundkreise in einer senkrecht zu der durch die beiden Schwenkachsen hindurchgehenden Ebene verlaufende Tangente berühren und das Verhältnis ihrer Durchmesser umgekehrt proportional zum Verhältnis der Schwenkwinkel der beiden Hebel gewählt ist. Auf diese Weise erübrigt sich auch hier ein separates Stellglied und ist der Kulissenstein bei einer Verstellung der beiden Hebel von diesen selbst genau entlang einer Bewegungsbahn geführt, wobei der Kulissenstein zufolge seiner Relativbewegung gegenüber zwei Kulissenflächen gegenüber jeder der beiden durch Schlitze gebildeten Kulissenflächen beim Verstellen der Hebel nur eine räumlich kurze Relativbewegung ausführt, so dass die Schlitze selbst kurz ausgebildet sein können, was im Hinblick auf eine raumsparende Ausbildung der Hebel vorteilhaft ist. Dadurch, dass der Verlauf jedes der beiden Schlitze einem Abschnitt einer bestimmten Kreisevolvente entspricht, ist erreicht, dass die von den beiden Hebeln gebildete Mitnehmereinrichtung für den Kulissenstein eine geradlinige Bewegungsbahn für denselben festlegt. Durch die geradlinige Bewegungsbahn für den Kulissenstein und den kreisevolventenförmigen Verlauf der beiden Schlitze ist eine solche Abstimmung der Schwenkbewegung der beiden Hebel erreicht, dass die beiden über die Kulissensteuerung miteinander gekoppelten Hebel bei ihrem Verschwenken je eine gleichförmige Schwenkbewegung ausführen, die einer gegenseitigen Abrollbewegung der beiden Grundkreise der Kreisevolventen entspricht. Ferner ist dadurch erreicht, dass beim Verschwenken der beiden Hebel die zwischen dem Kulissenstein und den als Kulissenflächen vorgesehenen Schlitzen auftretenden Kräfte stets senkrecht zu den Begrenzungswänden der Schlitze ausgerichtet sind, was im Hinblick auf eine einwandfreie und störungsfreie Kraftübertragung vorteilhaft ist.

Als einfach und vorteilhaft hat sich erwiesen, wenn der Kulissenstein durch einen zylindrischen Stift gebildet ist.

Weiter hat sich als vorteilhaft erwiesen, wenn der Kulissenstein zum Zusammenwirken mit mindestens einer Kulissenfläche eine drehbare Rolle aufweist. Hierdurch kann der Kulissenstein gegenüber der Kulissenfläche eine Rollbewegung ausführen, was im Hinblick auf ein günstiges Reibungsverhalten der Kulissensteuerung vorteilhaft ist.

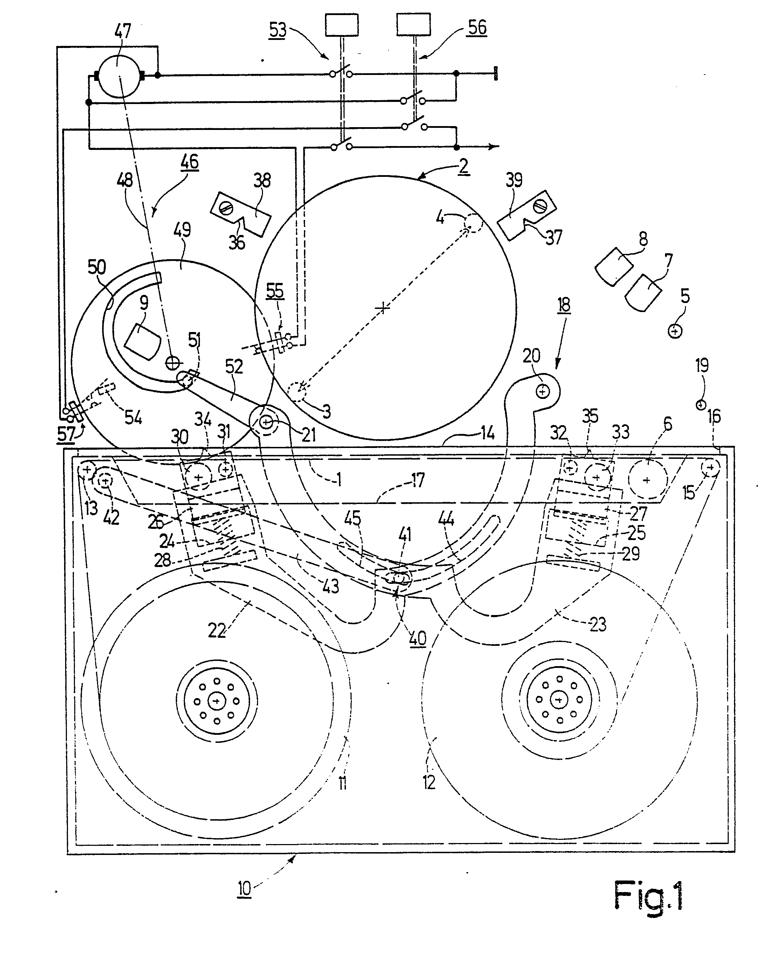

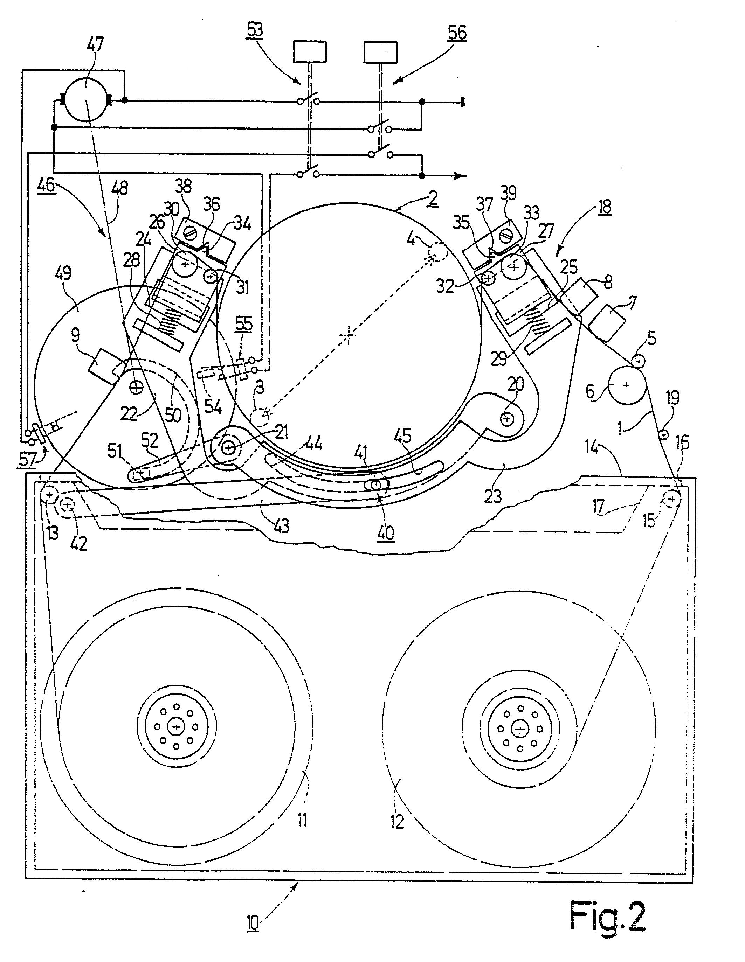

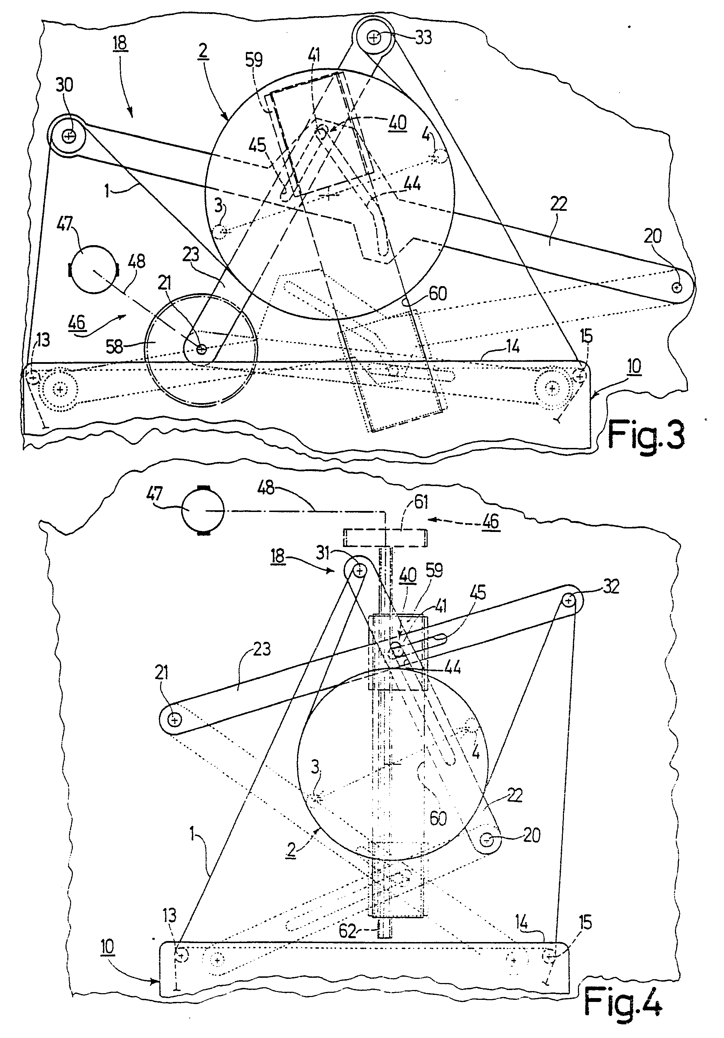

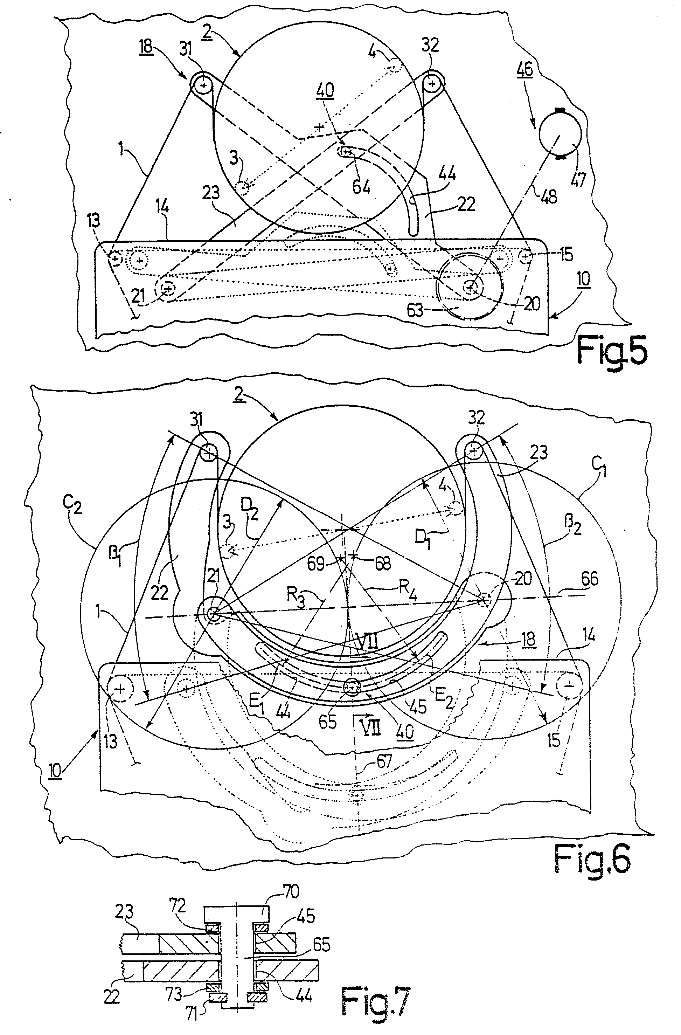

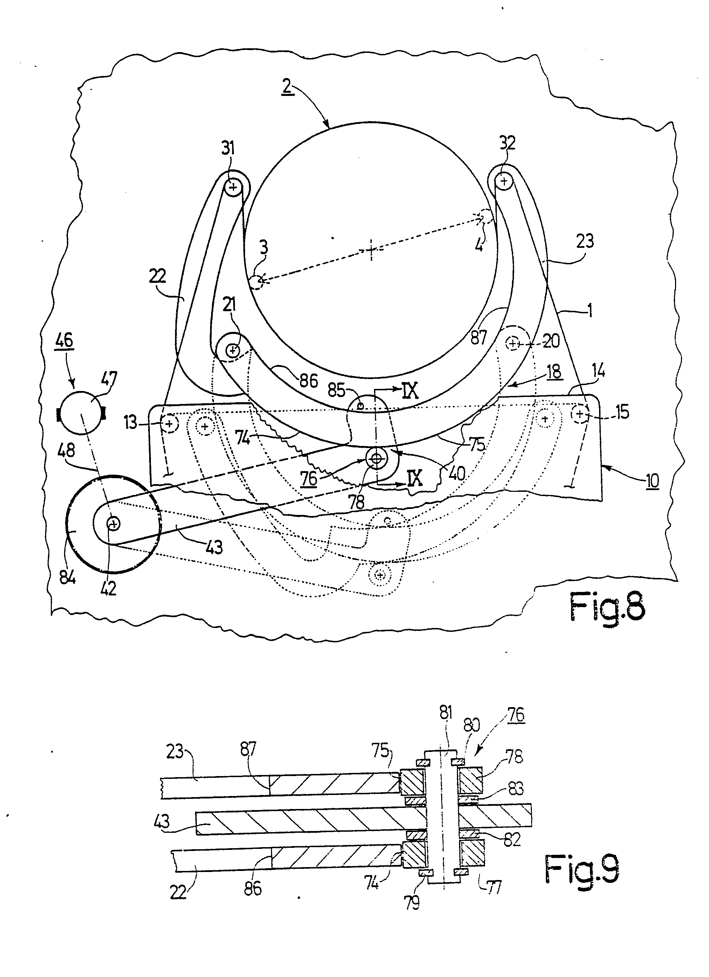

Die Erfindung wird im folgenden anhand von sechs in den Zeichnungen dargestellten Ausführungsbeispielen, auf welche die Erfindung jedoch nicht beschränkt sein soll, näher beschrieben. Die Fig. 1 zeigt auf schematische Weise in Draufsicht die erfindungswesentlichen Teile eines Aufzeichnungs- und/oder Wiedergabegerätes für einen in einer Kassette untergebrachten bandförmigen Aufzeichnungsträger gemäss einem ersten Ausführungsbeispiel der Erfindung, das zum Herumschlingen des Aufzeichnungsträgers um eine Bandführungstrommel eine Bandführungseinrichtung mit zwei sich überdeckenden, zwischen einer Ruhelage und einer Betriebslage verschwenkbaren Hebeln zum Tragen von je zwei Bandführungen aufweist, wobei an jedem Hebel ein Schlitz als Kulissenfläche vorgesehen ist, durch den ein auf einem als Mitnehmereinrichtung vorgesehenen verschwenkbaren Arm angebrachter, als Kulissenstein wirksamer Stift hindurchgeführt ist, und wobei die beiden Hebel in ihrer Ruhelage befindlich dargestellt sind. Die Fig. 2 zeigt das Gerät gemäss Fig. 1 in analoger Darstellungsweise, wobei die beiden Hebel der Bandführungseinrichtung in ihrer Betriebslage befindlich dargestellt sind. Die Fig. 3 zeigt schematisch in Draufsicht die erfindungswesentlichen Teile eines Gerätes gemäss einem zweiten Ausführungsbeispiel der Erfindung, bei dem ein als Kulissenstein vorgesehener Stift zum Koppeln der beiden je einen Schlitz als Kulissenfläche aufweisenden Hebel auf einem als Mitnehmereinrichtung vorgesehenen, verstellbar geführten Gleitteil angebracht ist, wobei die beiden Hebel in ihrer Ruhelage mit punktierten Linien und in ihrer Betriebslage mit vollen Linien dargestellt sind. Die Fig. 4 zeigt in der Darstellungsweise von Fig. 3 die erfindungswesentlichen Teile eines Gerätes gemäss einem dritten Ausführungsbeispiel der Erfindung, bei dem ein als Kulissenstein vorgesehener Stift zum Koppeln der beiden je einen geradlinigen Schlitz als Kulissenfläche aufweisenden Hebel auf einem als Mitnehmereinrichtung vorgesehenen, verschiebbar geführten Gleitteil angebracht ist, wobei der Gleitteil zum Verschwenken der beiden Hebel von einer Antriebseinrichtung her antreibbar ist. Die Fig. 5 zeigt in der Darstellungsweise von Fig. 3 die erfindungswesentlichen Teile eines Gerätes gemäss einem vierten Ausführungsbeispiel der Erfindung, bei dem die Mitnehmereinrichtung für eine als Kulissenstein vorgesehene drehbare Rolle durch einen der beiden Hebel selbst gebildet ist und nur der andere der beiden Hebel einen Schlitz als Kulissenfläche aufweist, durch den die Rolle hindurchgeführt ist. Die Fig. 6 zeigt in der Darstellungsweise von Fig. 3 die erfindungswesentlichen Teile eines Gerätes gemäss einem fünften Ausführungsbeispiel der Erfindung, bei dem die Mitnehmereinrichtung für einen als Kulissenstein vorgesehenen Stift durch die beiden Hebel selbst gebildet ist, wobei beide Hebel einen Schlitz mit einem kreisevolventenförmigen Verlauf als Kulissenfläche aufweisen und die zwei Schlitze den Stift schwimmend aufnehmen. Die Fig. 7 zeigt einen Schnitt gemäss der Linie VII-VII in Fig. 6 durch den als Kulissenstein vorgesehenen, schwimmend gehaltenen Stift in einem gegenüber Fig. 6 vergrössertem Massstab. Die Fig. 8 zeigt in der Darstellungsweise von Fig. 3 die erfindungswesentlichen Teile eines Gerätes gemäss einem sechsten Ausführungsbeispiel der Erfindung, bei dem der Kulissenstein zwei auf einem als Mitnehmereinrichtung vorgesehenen, verschwenkbaren Arm voneinander unabhängig drehbar gelagerte Rollen aufweist, die mit je einer als Kulissenfläche vorgesehenen Seitenwand der beiden Hebel zusammenwirken. Die Fig. 9 zeigt einen Schnitt gemäss der Linie IX-IX in Fig. 8 durch den zwei voneinander unabhängig drehbare Rollen aufweisenden Kulissenstein in einem gegenüber Fig. 8 vergrössertem Massstab.

In den Figuren 1 und 2 ist schematisch ein Aufzeichnungs- und/oder Wiedergabegerät dargestellt, das zum Aufzeichnen und/oder Wiedergeben von Signalen, insbesondere von Fernsehsignalen und den dazugehörigen Tonsignalen, auf einem magnetisierbaren bandförmigen Aufzeichnungsträger 1, der im folgenden einfach Band genannt ist, ausgebildet ist. Das Gerät weist eine Bandführungstrommel 2 auf, um deren Mantelfläche das Band 1 in einem Winkelbereich von im wesentlichen 180° in einer schraubenlinienförmigen Bahn schlingbar ist. Innerhalb der Bandführungstrommel 2 sind zwei schematisch dargestellte, rotierend antreibbare Magnetköpfe 3 und 4 vorgesehen, die durch einen in der Trommel 2 angebrachten Spalt hindurch, der die Trommel im wesentlichen in zwei Trommelhälften teilt, mit dem um die Trommel geschlungenen Band 1 in Wirkverbindung treten und das Band bei dessen Fortbewegung entlang von schräg zu dessen Längsrichtung verlaufenden Spuren abtasten, wobei die Magnetköpfe 3 und 4 Fernsehsignale auf dem Band aufzeichnen oder von demselben wiedergeben. Zum Fortbewegen des um die Bandführungstrommel 2 geschlungenen Bandes 1 weist das Gerät eine Antriebswelle 5 auf, an die das Band mit einer im Gerät auf nicht näher dargestellte Weise verstellbar angeordneten Andruckrolle 6 angedrückt werden kann.

Das Gerät weist ferner einen stillstehenden Magnetkopf 7 auf, mit dem auf dem Band 1 eine in dessen Längsrichtung verlaufende Spur abtastbar ist und ein zu den Fernsehsignalen gehöriges Tonsignal aufgezeichnet bzw. wiedergegeben werden kann. Neben dem Magnetkopf 7 ist ein weiterer stillstehender Magnetkopf 8 angeordnet, mit dem dieselbe Spur abtastbar ist, die auch der Magnetkopf 7 abtastet, und der zum Löschen von in dieser Spur aufgezeichneten Tonsignalen vorgesehen ist. Ein weiterer stillstehender Magnetkopf 9 ist dazu vorgesehen, sowohl die in den schrägen Spuren aufgezeichneten Fernsehsignale als auch das dazugehörige in der in Längsrichtung des Bandes verlaufenden Spur aufgezeichnete Tonsignal zugleich zu löschen.

Wie aus den Figuren 1 und 2 ersichtlich ist, ist das Band 1 in einer in das Gerät einsetzbaren, quaderförmigen Kassette 10 untergebracht, deren Kassettengehäuse zwei Hauptwände und vier Seitenwände aufweist, und die zur Aufnahme des Bandes nebeneinander liegende, drehbar gelagerte, rotierend antreibbare Spulen 11 und 12 enthält, zwischen denen das Band 1 verläuft. Hierbei ist das Band 1 in seinem Verlauf in der Kassette von der als Vorratsspule dienenden ersten Spule 11 zu einer ersten Umlenkrolle 13, von dieser längs der mit 14 bezeichneten Seitenwand zu einer zweiten Umlenkrolle 15 und von dieser zu der als Aufnahmespule dienenden zweiten Spule 12 geführt. Die Kassette 10 weist in der Seitenwand 14 eine Öffnung 16 auf, durch die das Band 1 aus der Kassette herausführbar ist, um dasselbe um die Bandführungstrommel 2 herumzuschlingen. Die Öffnung 16 setzt sich in ihrem mittleren Bereich in eine in einer Hauptwand des Kassettengehäuses wannenförmige Ausnehmung 17 fort. Die Kassette 10 weist zum Schutz des im Bereich der Öffnung 16 in der Seitenwand 14 von dem Kassettengehäuse nicht abgedeckten Abschnittes des Bandes 1 einen gegenüber dem Kassettengehäuse verstellbaren Kassettenverschluss auf, der beim Einsetzen der Kassette in das Gerät selbsttätig den erwähnten Abschnitt des Bandes freigibt, der aber hier der Deutlichheit und Einfachheit der Zeichnung halber nicht dargestellt ist, da er für die Erfindung nicht wesentlich ist.

Das Gerät weist zum Herausführen des Bandes 1 aus der Kassette 10 und zum Herumschlingen desselben um die Bandführungstrommel 2 eine Bandführungseinrichtung 18 auf. Wenn das Band 1 von der Bandführungseinrichtung 18 um die Bandführungstrommel 2 herumgeschlungen ist und zusätzlich die Andruckrolle 6 zur Antriebswelle 5 hinverstellt ist, welche Verstellung auch in bekannter Weise von der Verstellung der Bandführungseinrichtung 18 abgeleitet bzw. gesteuert werden kann, dann ist das Band im vorliegenden Fall auch mit den Magnetköpfen 7, 8 und 9, mit der Antriebswelle 5 und mit einem Bandführungsstift 19 in Wirkverbindung gebracht. Die Bandführungseinrichtung 18 weist zwei im Gerät um je eine Schwenkachse 20 und 21 verschwenkbar gelagerte, sich in einem entsprechend ihrem Verschwenken sich ändernden Überdeckungsgebiet überdeckende, plattenförmig ausgebildete Hebel 22 und 23 auf. Als Überdeckungsgebiet der beiden Hebel ist jenes Gebiet zu verstehen, in dem sich die beiden Hebel — in Richtung von deren zueinander parallelen Schwenkachsen 20 und 21 gesehen — überdecken. Dieses Überdeckungsgebiet ändert sich beim Verschwenken der beiden Hebel, wie dies aus den Figuren 1 und 2 ersichtlich ist. Im vorliegenden Fall ist das Überdeckungsgebiet bei der in Fig. 1 dargestellten Lage kleiner als bei der in Fig. 2 dargestellten Lage der beiden Hebel 22 und 23.

Jeder der beiden Hebel ist an seinem freien Ende mit einer rechteckigen, durchgehenen Ausnehmung 24 bzw. 25 versehen, in die ein U-förmiger Bügel 26 bzw. 27 eingesetzt ist, der von einer sich am Hebel 22 bzw. 23 abstützenden Druckfeder 28 bzw. 29 in Richtung zum freien Ende des Hebels 22 bzw. 23 hin federnd belastet ist. Jeder U-förmige Bügel 26 bzw. 27 trägt an einem seiner beiden Schenkel zwei Bandführungen 30 und 31 bzw. 32 und 33, die in den Figuren 1 und 2 nur schematisch dargestellt sind. Beispielsweise sind die Bandführungen 30 und 33 als drehbare Rollen und die Bandführungen 31 und 32 als stillstehende Stifte ausgebildet. Die beiden Schenkel jedes U-förmigen Bügels 28 bzw. 27 liegen zu beiden Seiten am plattenförmigen Hebel 22 bzw. 23 an, wodurch die Lage jedes Bügels und der darauf angebrachten Bandführungen in axialer Richtung der Bandführungsrollen 30 und 33 bestimmt ist. An dieser Stelle sei der Vollständigkeit halber erwähnt, dass die Stifte 31 und 32 und die Bandführungstrommel 2 gegenüber den anderen mit dem Band zusammenwirkenden Bauteilen geneigt angeordnet sind, um den vorerwähnten schraubenlinienförmigen Verlauf des Bandes 1 um die Bandführungstrommel 2 zu erzielen, was aber der Einfachheit halber und der Deutlichkeit der Zeichnung halber nicht dargestellt ist.

Die beiden Hebel 22 und 23 der Bandführungseinrichtung 18 sind von einer nachfolgend noch detailliert beschriebenen Antriebseinrichtung her zwischen einer in Fig. 1 dargestellten Ruhelage, in der die Bandführungen 30, 31, 32 und 33 das in der Kassette 10 untergebrachte Band 1 im Bereich von deren Öffnung 16 hintergreifen, wobei die Bandführungen durch die wannenförmige Ausnehmung 17 der Kassette in dieselbe eingeführt sind, und einer in Fig. 2 dargestellten Betriebslage verschwenkbar, in der die Bandführungen das beim Verschwenken der beiden Hebel von ihrer Ruhelage in ihre Betriebslage mitgenommene Band 1 um die Bandführungstrommel 2 herumgeschlungen halten. In der Ruhelage der beiden Hebel 22 und 23 stütz sich jeder U-förmige Bügel 26 bzw. 27 mit seinem Basisteil an der dem freien Ende des betreffenden Hebels 22 bzw. 23 zugewandten Begrenzungswand der rechteckigen Ausnehmung 24 bzw. 25 unter der Wirkung der Druckfeder 28 bzw. 29 ab. In der Betriebslage der beiden Hebel stützt sich jeder Bügel mit seinem einen keilförmigen Ansatz 34 bzw. 35 aufweisenden freien Ende an einem eine V-förmige Nut 36 bzw. 37 aufweisenden Positionierblock 38 bzw. 39 ab, wobei die keilförmigen Ansätze 34 und 35 in die V-förmigen Nuten 36 und 37 ragen. Auf diese Weise ist in der Betriebslage der beiden Hebel 22 und 23 eine genaue Positionierung für die Bügel 26 und 27 und die darauf angebrachten Bandführungen 30, 31 32 und 33 erreicht. Wie aus Fig. 2 ersichtlich ist, sind hierbei die Bügel 26 und 27 mit ihrem Basisteil entgegen der Wirkung der Druckfedern 28 und 29 von den den freien Enden der Hebel zugewandten Begrenzungswänden der Ausnehmungen 24 und 25 abgehoben, was einfach dadurch erreicht ist, dass die Verstellung der beiden Hebel von ihrer Ruhelage in ihre Betriebslage mit einem vorgegebenen Überhub erfolgt. Auf diese Weise halten die Druckfedern 28 und 29 die Bügel 26 und 27 mit ihren freien Enden gegen die Positionierblöcke 38 und 39 gedrückt.

Beim Verschwenken der beiden Hebel zwischen ihrer Ruhelage und ihrer Betriebslage ist es wesentlich, dass die Hebel eine gleichmässige und genau aufeinander abgestimmte Verstellbewegung ausführen, damit bei ihrer Verstellung das Band von den an den Hebeln angebrachten Bandführungen nicht in unerwünschter Weise belastet wird, und dass die beiden Hebel und die auf denselben angebrachten Bandführungen stets zugleich ihre Ruhelage bzw. Betriebslage erreichen, damit die Bandführungen bei sich in ihrer Ruhelage befindlichen Hebeln stets mit Sicherheit

**0 074 149**

das Band hintergreifen und bei sich in ihrer Betriebslage befindlichen Hebeln das Band einwandfrei und exakt um die Bandführungstrommel herumgeschlungen halten. Zum Abstimmen der Schwenkbewegungen der beiden Hebel 22 und 23 aufeinander sind diese über eine unmittelbar an denselben angreifende Kopplungseinrichtung miteinander gekoppelt. Die Kopplungseinrichtung ist hierbei in besonders einfacher, stabiler und betriebssicherer Weise durch eine Kulissensteuerung 40 gebildet. Die Kulissensteuerung 40 weist einen in Richtung der Schwenkachsen 20 und 21 derbeiden Hebel 22 und 23 verlaufenden, im jeweiligen Überdeckungsgebiet der beiden Hebel an denselben kraftschlüssig angreifenden Kulissenstein auf, der einfach durch einen zylindrischen Stift 41 gebildet ist. Mit dem Stift 41 wirkt eine quer zu den Schwenkachsen 20 und 21 der beiden Hebel 22 und 23 verstellbare Mitnehmereinrichtung kraftschlüssig zusammen, die den Stift 41 beim Verschwenken der beiden Hebel zwischen deren Ruhelage und deren Betriebslage entlang einer durch das jeweilige Überdeckungsgebiet der beiden Hebel verlaufenden, von der Mitnehmereinrichtung festgelegten Bewegungsbahn mitnimmt und führt. Die Mitnehmereinrichtung für den als Kulissenstein vorgesehenen Stift 41 ist durch ein separates Stellglied gebildet, und zwar auf einfache Weise durch einen im Gerät um eine Schwenkachse 42 verschwenkbar gelagerten, gegenüber den beiden Hebeln 22 und 23 verstellbaren, plattenförmig ausgebildeten Arm 43, auf dem der Stift 41 feststehend angebracht ist und der den Stift 41 entlang einer durch das jeweilige Überdeckungsgebiet der beiden Hebel verlaufenden Kreisbahn führt. Der als Mitnehmereinrichtung für den Stift 41 vorgesehene plattenförmige Arm 43 liegt in Richtung der Schwenkachsen gesehen zwischen den beiden plattenförmigen Hebeln 22 und 23, wie dies aus Fig. 2 erkennbar ist, wobei der Stift 41 den Arm 43 durchsetzt, so dass die beiden freien Enden des Stiftes 41 zu beiden Seiten des Armes 43 liegen.

Jeder der beiden Hebel 22 und 23 weist zur Bildung einer Kulissenfläche der Kulissensteuerung 40 einen im jeweiligen Überdeckungsgebiet verlaufenden, zur Bewegungsbahn des als Kulissenstein vorgesehenen Stiftes 41 korrespondierenden Schlitz 44 und 45 mit einem im wesentlichen bogenförmigen Schlitzverlauf auf, wobei sich die beiden Schlitze 44 und 45 im jeweiligen Überdeckungsgebiet der beiden Hebel ebenfalls überdecken. Die Schlitze 44 und 45 liegen dabei je in einer senkrecht zu den Schwenkachsen 20 und 21 der beiden Hebel verlaufenden Ebene und der in Richtung der Schwenkachsen verlaufende, den Arm 43 durchsetzende Stift 41 ist mit jedem seiner beiden freien Enden durch einen der beiden Schlitze 44 und 45 an den beiden Hebeln mit Spiel hindurchgeführt, wobei der Stift 41 beim Verschwenken der beiden Hebel zwischen deren Ruhelage und deren Betriebslage entlang den Schlitzen gleitet und dafür sorgt, dass die Schwenkbewegungen der beiden Hebel genau aufeinander abgestimmt sind und dass die beiden Hebel stets zugleich ihre Betriebslage bzw. ihre Ruhelage erreichen. Das in diesem Fall vorgesehene Spiel zwischen dem als Kulissenstein vorgesehenen Stift und den als Kulissenflächen vorgesehenen Schlitzen kann zur Erzielung einer leichtgängigen Gleitbewegung entlang des gesamten Schlitzverlaufes jedes Schlitzes gleich gross sein. In der Praxis hat sich zweckmässig erwiesen, wenn das Spiel an den Enden der Schlitze kleiner ist als im übrigen Schlitzverlauf, weil dadurch die Position der beiden Hebel in ihrer Ruhelage und ihrer Betriebslage genau festgelegt ist. Die Bewegungsbahn des Stiftes 41, also dessen Kreisbahn, ist im wesentlichen durch die Wahl der Länge des Armes 43 und der Lage von dessen Lager 42 so ausgebildet, dass bei einer Verstellung der beiden Hebel zwischen deren Ruhelage und deren Betriebslage die Kraftübertragung zwischen dem Stift 41 und den Schlitzen 44 und 45 im wesentlichen senkrecht zu den Begrenzungswänden der Schlitze erfolgt, wodurch stets ein einwandfreies Gleiten des Stiftes in den Schlitzen und eine einwandfreie Kraftübertragung gewährleistet ist, ohne dass die Gefahr einer Selbsthemmung zwischen denselben besteht. Im vorliegenden Fall sind der Verlauf der Bewegungsbahn des als Kulissenstein wirksamen Stiftes 41, also dessen Kreisbahn, und die Schlitzverläufe der Schlitze 44 und 45 so zueinander korrespondierend gewählt, dass die Schwenkbewegungen der beiden Hebel bei deren Verstellung so aufeinander abgestimmt sind, dass beide Hebel in jeder Bewegungsphase gleichmässig und stetig verschwenkt werden, um ein sicheres und schonendes Mitnehmen des Bandes durch die an den Hebeln angebrachten Bandführungen zu gewährleisten.

Zum Verstellen der beiden Hebel 22 und 23 zwischen ihrer Ruhelage und ihrer Betriebslage ist, wie bereits erwähnt, eine motorische Antriebseinrichtung 46 vorgesehen, die einen in seiner Drehrichtung umschaltbaren Motor 47 aufweist. Der Motor 47 ist über eine symbolisch als strichpunktierte Linie angedeutete selbsthemmende Antriebsverbindung 48, die beispielsweise als selbsthemmendes Schneckengetriebe ausgebildet ist, mit einer rotierend antreibbaren Steuerscheibe 49 verbunden. Die Steuerscheibe 49 ist an einer Stirnfläche mit einer Steuernut 50 versehen. In die Steuernut 50 ragt ein Steuerstift 51, der von einem Steuerhebel 52 getragen ist, welcher mit der Achse 21 des Hebels 23 unverdrehbar verbunden ist.

Um die beiden Hebel von ihrer Ruhelage in ihre Betriebslage zu verschwenken, um das Band 1 aus der Kassette 10 herauszuführen, muss der Steuerhebel 52 entgegen dem Uhrzeigersinn verschwenkt werden, was dann geschieht, wenn die Steuerscheibe 49 aus der in Fig. 1 dargestellten Lage entgegen dem Uhrzeigersinn verdreht wird. Zu diesem Zweck wird der Motor 47 über eine erste Schalteinrichtung 53 an eine Versorgungsspannung V angeschaltet. Durch Betätigen der ersten Schalteinrichtung 53 wird der Motor 47 in einer ersten Drehrichtung angetrieben, wobei über die selbsthemmende Antriebsverbindung 48 die Steuerscheibe 49 aus der in Fig. 1 dargestellten Lage entgegen dem Uhrzeigersinn verdreht wird. Dabei wird der Steuerhebel 52 über den Steuerstift 51 von der Steuernut 50 her ebenfalls entgegen dem Uhrzeigersinn verschwenkt, was ein entsprechendes Verschwenken des Hebels 23 zur Folge hat. Durch die Kopplung des Hebels 23 über die Kulissensteuerung 40 mit dem Hebel 22 wird auch der Hebel 22 in genau abgestimmter Weise mitverschwenkt, wobei auch der den Stift 41 tragende Arm 43 mitverstellt wird und dabei den Stift entlang einer Kreisbahn mitnimmt und führt. Knapp vor Erreichen der Betriebslage der beiden Hebel stossen die U-förmigen Bügel 26 und 27 gegen die Positionierblöcke 38 und 39, wodurch die Bügel an einer weiteren Verstellung gehindert sind und die zwischen den Bügeln und den Hebeln wirksamen Druckfedern 28 und 29 komprimiert werden. Wenn die beiden Hebel 22 und 23 nach ihrer weiteren Verstellung ihre Betriebslage erreichen, was aufgrund der genau aufeinander abgestimmten Verstellbewegung zum gleichen Zeitpunkt erfolgt, stösst ein an der Steuerscheibe 49 vorgesehener Ansatz 54 gegen einen ersten Endlagenschalter 55, der den durch das Betätigen der ersten Schalteinrichtung 52 geschlossenen Stromkreis für den Motor 47 wieder unterbricht. Hierdurch kommt der Motor 47 zum Stillstand und die beiden Hebel 22 und 23 werden über die selbsthemmende Antriebsverbindung 48 in ihrer Betriebslage gehalten. Bei der Verstellung der beiden Hebel von ihrer Ruhelage in ihre Betriebslage nehmen die von den Hebeln getragenen Bandführungen 30, 31, 32 und 33 das Band 1 mit, wobei dasselbe aus der Kassette 10 gleichmässig und schonend herausgeführt und um die Bandführungstrommel 2 geschlungen wird. Hierbei muss selbstverständlich zumindest eine der beiden Spulen 11 und 12 zur Drehung freigegeben sein, um das Band 1 abwickeln zu können. Wenn sich die beiden Hebel 22 und 23 in ihrer Betriebslage befinden, nimmt das Band 1 den in Fig. 2 dargestellten Verlauf ein, und zwar von der ersten Spule 11 über die Umlenkrolle 13, den Magnetkopf 9, die Bandführungen 30 und 31, die Bandführungstrommel 2, die Bandführungen 32 und 33, die Magnetköpfe 8 und 7, die Antriebswelle 5 und die Andruckrolle 6, den Bandführungsstift 19 und die Umlenkrolle 15 zur zweiten Spule 12. In dieser Situation können dann Signale in einwandfreier Weise auf dem Band 1 aufgezeichnet oder von demselben wiedergegeben werden.

Um das Band 1 in die Kassette 10 zurückzubringen, sind die beiden Hebel aus ihrer Betriebslage in ihre Ruhelage zu verstellen. Hierfür wird der Motor 47 über eine zweite Schalteinrichtung 56 an die Versorgungsspannung V angeschaltet. Durch Betätigen der zweiten Schalteinrichtung 56 wird der Motor 57 in einer zur vorerwähnten ersten Drehrichtung entgegengesetzten Drehrichtung angetrieben, wodurch die Steuerscheibe 49 aus der in Fig. 1 dargestellten Lage im Uhrzeigersinn verdreht wird. Diese Verdrehung hat eine entsprechende Verstellung des Steuerhebels 52 und folglich der beiden über die Kulissensteuerung 40 miteinander gekoppelten Hebel 22 und 23 aus ihrer Betriebsin ihre Ruhelage zur Folge. Beim Verlassen der Betriebslage wird jeder U-förmige Bügel 26 bzw. 27 durch die an ihm angreifende Druckfeder 28 bzw. 29 mit seinem Basisteil wieder gegen die dem freien Ende des betreffenden Hebels zugewandte Begrenzungswand der rechteckigen Ausnehmung 24 bzw. 25 gedrückt. Wenn die beiden Hebel ihre Ruhelage erreichen, was aufgrund der durch die Kulissensteuerung 40 genau aufeinander abgestimmten Verstellbewegung ebenfalls zum gleichen Zeitpunkt erfolgt, stösst der an der Steuerscheibe 49 vorgesehene Ansatz 54 an gegen einen zweiten Endlagenschalter 57, der den durch das Betätigen der zweiten Schalteinrichtung 56 geschlossenen Stromkreis für den Motor 47 wieder unterbricht. Hierdurch kommt der Motor 47 zum Stillstand und die beiden Hebel werden über die selbsthemmende Antriebsverbindung 48 in ihrer Ruhelage gehalten. Beim Verschwenken der beiden Hebel von ihrer Betriebslage in ihre Ruhelage kehren die von den Hebeln getragenen Bandführungen in ihre innerhalb der Ausnehmung 17 in der Kassette 10 liegenden Positionen zurück, wobei das Band 1 in die Kassette 10 zurückgebracht wird. Es ist klar, dass hierbei mindestens eine der beiden Spulen 11 und 12 zum Aufwickeln des Bandes angetrieben werden muss. In dieser Situation kann dann die Kassette aus dem Gerät entnommen werden und gegebenenfalls eine andere Kassette in das Gerät eingesetzt werden, wobei dann die Bandführungen das Band der anderen Kassette wieder absolut sicher hintergreifen. Es sei noch erwähnt, dass die Antriebseinrichtung 46 zum Verschwenken der beiden Hebel 22 und 23 in analoger Weise auch auf den Arm 43 wirken könnte, wobei dann durch Antreiben des Armes 43 über den Stift 41 und die Schlitze 44 und 45 der Kulissensteuerung 40 die beiden Hebel 22 und 23 in ebenfalls genau aufeinander abgestimmter Weise verschwenkt werden.

Wie aus vorstehender Beschreibung ersichtlich ist, ist durch das Vorsehen einer Kulissensteuerung mit einem auf einem verschwenkbaren Arm angebrachten Stift als Kulissenstein, der durch je einen als Kulissenfläche vorgesehenen Schlitz eines Hebels zum Tragen der Bandführungen hindurchgeführt ist, zwischen den beiden Hebeln eine besonders einfache, stabile und sichere Kopplung erreicht, die stets eine genau aufeinander abgestimmte Verstellung der beiden Hebel gewährleistet und sicherstellt, dass die beiden Hebel stets zugleich ihre Betriebslage bzw. ihre Ruhelage erreichen. Da ein solcher in Schlitzen gleitender Stift auch praktisch keiner Abnützung unterliegt, ist auch nach lagem Gebrauch des Gerätes stets noch eine exakte und betriebssichere Kopplung zwischen den beiden Hebeln zum Anpassen ihrer Verstellbewegungen gewährleistet. Das Vorsehen eines schwenkbaren Armes als Mitnehmereinrichtung für den Stift ist als sehr einfach und auch raumsparend zu beurteilen. Dadurch, dass der Stift auf einer im wesentlichen senkrecht zu den Schlitzverläufen der Schlitze ausgerichteten Bewegungs-bahn von dem Arm geführt ist, erfolgt auch die Kraftübertragung zwischen dem Stift und den Schlitzen der Kulissensteuerung im wesentlichen senkrecht zu den Begrenzungswänden der Schlitze, wodurch stets für eine einwandfreie und ungestörte Kraftübertragung gesorgt ist. Die beiden Schlitze weisen je nur einen kurzen Schlitzverlauf auf, was im Hinblick auf den benötigten Raumbedarf und damit im Hinblick auf eine möglichst kompakte Ausbildung der Hebel der Bandführungseinrichtung von Vorteil ist. Durch die Ausbildung der Kulissenflächen als Schlitze, durch die der als Kulissenstein vorgesehene Stift hindurchgeführt ist, kann der Stift nicht ungewollt von den Kulissenflächen abheben, wobei zusätzlich erreicht ist, dass diese Kulissensteuerung sowohl bei der Verstellung der Hebel in ihre Betriebslage als auch bei der Verstellung der Hebel in ihre Ruhelage wirksam ist.

Die Darstellungsweise in Fig. 3 ist gegenüber jener in den Figuren 1 und 2 noch mehr schematisiert, wobei der Einfachheit halber von dem in Fig. 3 dargestellten Gerät nur mehr die Bandführungseinrichtung 18 zum Herausführen des Bandes 1 aus der Kassette 10 und zum Herumschlingen des Bandes um die Bandführungstrommel 2 dargestellt ist, wogegen alle anderen mit dem Band zusammenwirkenden Bauelemente weggelassen sind. Imvorliegenden Fall trägt jeder Hebel 22 bzw. 23 als Bandführung nur je eine Rolle 30 und 33 und weist die Antriebseinrichtung 46 zum Verstellen der beiden Hebel ein auf der Achse 21 des Hebels 23 drehfest befestigtes Zahnrad 58 auf, das über die Antriebsverbindung 48 von dem Motor 47 her mit konstanter Geschwindigkeit antreibbar ist, wobei in diesem Fall zwischen dem Motor 47 und der Antriebsverbindung 48 eine Überlastkupplung aufgenommen ist. Die beiden Rollen 30 und 33 können analog wie beim Gerät gemäss den Figuren 1 und 2 auf den Hebeln 22 und 23 entgegen Federkraft verstellbar angebracht sein, wobei dann in der Betriebslage der beiden Hebel die beiden Rollen auch mit je einer Positioniereinrichtung in ihrer räumlichen Lage positioniert werden können.

Als Mitnehmereinrichtung für den als Kulissenstein vorgesehenen Stift 41 der Kulissensteuerung 40 ist wieder ein separates Stellglied vorgesehen, das hier als Gleitteil 59 ausgebildet ist, der in einer geradlinigen Führung 60 für denselben verschiebbar geführt ist, und zwar zwischen zwei durch die Enden der Führung 60 festgelegten Positionen, in welchen die beiden Hebel 22 und 23, die über den durch ihre als Kulissenfläche vorgesehenen Schlitze 44 und 45 hindurchgeführten Stift 41 der Kulissensteuerung 40 miteinander gekoppelt sind, ihre mit punktierten Linien dargestellte Ruhelage bzw. ihre mit vollen Linien dargestellte Betriebslage einnehmen. Sobald der Gleitteil 59 gegen ein Ende seiner Führung anstösst, tritt die zwischen dem Motor 47 und die Antriebsverbindung 48 der Antriebseinrichtung 46 aufgenommene Überlastkupplung in Funktion, um die Antriebswirkung des Motors auf den Gleitteil aufzuheben. Der Gleitteil 59 ist in seinen durch die Enden der Führung festgelegten Positionen durch die selbsthemmende Wirkung der Antriebsverbindung 48 gehalten. Durch den Gleitteil 59 ist der Stift 41 der Kulissensteuerung 40 bei einer Verstellung der beiden Hebel längs einer geradlinigen Bewegungsbahn stabil und sicher mitgenommen und geführt. An dieser Stelle sei erwähnt, dass gegebenenfalls ein solcher als Mitnehmereinrichtung vorgesehener Gleitteil selbstverständlich auch längs einer gekrümmt verlaufenden Führung verstellbar geführt sein kann, wobei dann die Bewegungsbahn des Stiftes einfach den gestellten Erfordernissen, beispielsweise im Hinblick auf eine einwandfreie und sichere Kraftübertragung oder auf eine beliebige Abstimmung der Schwenkbewegungen der beiden Hebel, angepasst werden kann.

Wie aus Fig. 3 ersichtlich ist, weist der Schlitz 45 im Hebel 23 einen einfachen geradlinigen Schlitzverlauf auf. Ferner sind im vorliegenden Fall die geradlinige Bewegungsbahn des Stiftes 41 und die Schlitzverläufe der beiden Schlitze 44 und 45 so zueinander korrespondierend gewählt, dass die Schwenkbewegungen so aufeinander abgestimmt sind, dass ein gleichförmiges Verstellen der beiden Hebel 22 und 23 erreicht ist. Mit anderen Worten heisst es, dass jeder Schlitz der Kulissensteuerung 40 in seiner Form und in seiner Anordnung am Hebel sowie der Verlauf der Bewegungsbahn des Stiftes 41 der Kulissensteuerung so zueinander korrespondierend gewählt sind, dass jeder der beiden Hebel bei seiner Verstellung im wesentlichen eine gleichförmige Bewegung ausführt, was eine besonders gleichmässige und ruckfreie Verstellung der beiden Hebel gewährleistet.

Auch bei diesem Gerät ist eine genaue und sichere Kopplung der beiden Hebel über eine einfache Kulissensteuerung erreicht, wobei die beiden Hebel in genau aufeinander abgestimmter Weise je eine gleichförmige Schwenkbewegung ausführen. Dadurch, dass die Hebel und damit die von denselben getragenen Bandführungen mit einer gleichförmigen Verstellbewegung verstellt werden, ist ein besonders gleichmässiges, ruckfreies und schonendes Herausziehen bzw. Rückführen des Bandes aus der Kassette bzw. in die Kassette erreicht. Der einfach als Stift ausgebildete Kulissenstein ist hierbei mit Hilfe eines als Mitnehmereinrichtung wirksamen Gleitteiles stabil und sicher geführt.

Bei dem Gerät gemäss Fig. 4 trägt jeder Hebel 22 bzw. 23 als Bandführung einen Stift 31 bzw. 32 wobei wiederum jeder Stift am betreffenden Hebel verstellbar angebracht sein kann. Die Antriebseinrichtung 46 zum Verstellen der beiden Hebel ist zum Zusammenwirken mit der durch den Gleitteil 59 gebildeten Mitnehmereinrichtung für den als Kulissenstein vorgesehenen Stift 41 ausgebildet. Hierzu treibt der Motor 47 wieder über eine Überlastkupplung und die Antriebsverbindung 48 ein Zahnrad 61, das eine Gewindespindel 62 antreibt. Die Gewindespindel ist durch eine Gewindebohrung des in der Führung 60 verschiebbar geführten Gleitteiles 59 hindurchgeführt, so dass durch Antreiben der Gewindespindel in entgegengesetzten Drehrichtungen der Gleitteil in entgegengesetzten Richtungen verstellbar ist, wobei dann die über den am Gleitteil angebrachten Stift 41 und die Schlitze 44 und 45 der Kulissensteuerung 40 miteinander gekoppelten Hebel 22 und 23 zwischen ihrer mit punktierten Linien dargestellten Ruhelage und ihrer mit vollen Linien dargestellten Betriebslage in genau aufeinander abgestimmter Weise verschwenkbar sind.

Die Schlitze 44 und 45 der Kulissensteuerung 40 weisen in diesem Fall beide einen einfachen geradlinigen Schlitzverlauf auf. Durch die geradlinige Ausbildung der Schlitzverläufe und den geradlinigen Verlauf der Bewegungsbahn des als Kulissenstein vorgesehenen Stiftes ist die Abstimmung der Schwenkbewegungen der beiden Hebel so getroffen, dass die beiden Hebel beim Verschwenken jeweils zuerst beschleunigt und dann wieder abgebremst werden. Dabei ist für eine ruhige und genau aufeinander abgestimmte Verstellung und der beiden Hebel gesorgt, was ein sicheres und schonendes Mitnehmen des Bandes zur Folge hat, und es ist gewährleistet, dass die Hebel wieder zugleich ihre Betriebslage bzw. ihre Ruhelage erreichen.

Bei dem Gerät gemäss Fig. 5 trägt jeder Hebel 22 bzw. 23 als Bandführung einen Stift 31 bzw. 32 und ist die Antriebseinrichtung 46 analog zu jener des in Fig. 3 dargestellten Gerätes ausgebildet, wobei jedoch hier ein von der Antriebseinrichtung 46 angetriebenes Zahnrad 63 auf die Achse 20 des Hebels 22 drehfest aufgesetzt ist.

Bei diesem Gerät ist die Mitnehmereinrichtung für den Kulissenstein der Kulissensteuerung 40 einfach durch den Hebel 23 selbst gebildet. Der Kulissenstein ist hierbei durch eine drehbare Rolle 64 gebildet, die auf dem Hebel 23 drehbar gelagert ist. Die Rolle 64 ist durch einen als Kulissenfläche vorgesehenen, einen bogenförmigen Schlitzverlauf aufweisenden Schlitz 44 am anderen Hebel 22 hindurchgeführt. Beim Verstellen der beiden Hebel zwischen ihrer Ruhelage und ihrer Betriebslage rollt die Rolle 64 an den Begrenzungswänden des Schlitzes 44 ab. Eine solche Rollbewegung gewährleistet einen geringen Reibungswiderstand und damit eine leichtgängige Verstellbarkeit der beiden Hebel. Auch in diesem Fall ist der Schlitzverlauf des Schlitzes 44 und die hier wieder kreisbogenförmige Bewegungsbahn des Stiftes 41 so zueinander korrespondierend gewählt, dass die Schwenkbewegungen der beiden Hebel so aufeinander abgestimmt sind, dass ein gleichförmiges Verstellen der beiden Hebel 22 und 23 erreicht ist.

Auch bei diesem Gerät ist eine sehr einfache und auch genaue Kopplung zwischen den beiden Hebeln und damit eine genau aufeinander abgestimmte Verstellung derselben erreicht. Durch die gleichförmige Verstellung der beiden Hebel ist wieder ein besonders schonendes Herausziehen des Bandes aus der Kassette bzw. Rückführen des Bandes in die Kassette gewährleistet. Durch das Anbringen der als Kulissenstein vorgesehenen Rolle an einem der beiden Hebel erübrigt sich eine separate Mitnehmereinrichtung. Durch das Ausbilden des Kulissensteines als Rolle findet beim Verstellen der beiden Hebel ein Abrollen des Kulissensteines an der Kulissenfläche statt, was im Hinblick auf einen geringen Reibungswiderstand und damit eine leichtgängige Verstellung von Vorteil ist.

Bei dem Gerät gemäss Fig. 6 trägt jeder Hebel 22 bzw. 23 als Bandführung einen Stift 31 bzw. 32, der analog wie beim Gerät gemäss den Figuren 1 und 2 auf dem betreffenden Hebel 22 bzw. 23 verstellbar angeordnet ist, um analog wie beim Gerät gemäss den Figuren 1 und 2 eine genaue Positionierung des Stiftes mit einer Positioniereinrichtung bei sich in ihrer Betriebslage befindlichen Hebeln zu gewährleisten. Dies ist der Einfachheit der Zeichnung halber aber hier nicht dargestellt, da es für die vorliegende Erfindung auch nicht wesentlich ist. Eine Antriebseinrichtung zum Antreiben der beiden Hebel 22 und 23, die hier der Einfachheit halber ebenfalls nicht dargestellt ist, kann vollkommen analog zu jener im Gerät gemäss den Figuren 1 und 2 ausgebildet sein und einen der beiden Hebel antreiben. Auch kann zum Antreiben der beiden Hebel an einer der beiden Schwenkachsen 20 bzw. 21 ein motorisch antreibbares Zahnrad angebracht sein, wie bei den Geräten gemäss den Figuren 3 und 5.

Die beiden Hebel 22 und 23 sind zum Abstimmen ihrer Schwenkbewegungen aufeinander über eine Kulissensteuerung 40 miteinander gekoppelt, deren Kulissenstein durch einen zylindrischen Stift 65 gebildet ist. Die Mitnehmereinrichtung für den durch den Stift 65 gebildeten Kulissenstein ist in diesem Fall durch die beiden Hebel 22 und 23 selbst gebildet, so dass sich einfacherweise eine separate Mitnehmereinrichtung erübrigt. Die beiden Hebel 22 und 23 weisen zur Bildung je einer Kulissenfläche einen Schlitz 44 bzw. 45 auf. Die beiden Schlitze 44 und 45 über-decken sich im jeweiligen Überdeckungsgebiet der beiden Hebel ebenfalls und nehmen in diesem Überdeckungsgebiet den Stift 65 schwimmend auf, wie nachfolgend anhand von Fig. 7 noch detailliert beschrieben ist. Der Verlauf jedes Schlitzes 44 bzw. 45 entspricht dabei im wesentlichen einem Abschnitt einer Kreisevolvente $E_1$ bzw. $E_2$, deren Grundkreis $C_1$ bzw. $C_2$ zentrisch zu der Schwenkachse 20 bzw. 21 des betreffenden Hebels 22 bzw. 23, in dem der Schlitz 44 bzw. 45 vorgesehen ist, liegt. Die beiden Grundkreise $C_1$ und $C_2$ der Kreisevolventen $E_1$ und $E_2$ berühren sich in einer senkrecht zu der durch die beiden Schwenkachsen 20 und 21 hindurchgehenden, in Fig. 6 mit einer strichpunktierten Linie angegebenen Ebene 66 verlaufenden, ebenfalls mit einer strichpunktierten Linie angegebenen Tangente 67 und das Verhältnis ihrer Durchmesser $D_1$ bzw. $D_2$ ist umgekehrt proportional zum Verhältnis der Schwenkwinkel $\beta_1$ bzw. $\beta_2$ der beiden Hebel 22 und 23 gewählt. Im vorliegendem Fall sind die beiden Abschnitte der Kreisevolventen $E_1$ und $E_2$ in ihrem Verlauf im Mittel durch je einen Abschnitt eines Krümmungskreises der Kreisevolventen in guter Näherung ersetzt, weil sich dadurch die Schlitzherstellung etwas vereinfacht. Die Mittelpunkte dieser beiden Krümmungskreise sind in Fig. 6 mit den Bezugzeichen 68 und 69 und deren mit strichpunktierten Linien dargestellte Radien mit $R_3$ und $R_4$ bezeichnet.

Der als Stift 65 ausgebildete Kulissenstein ist in den beiden Schlitzen 44 und 45 schwimmend aufgenommen. Der Stift 65 ist also entlang der Schlitze 44 und 45 bewegbar und wird dabei von den beiden Hebeln 22 und 23 selbst in dessen axialer Richtung gehalten. Wie hierzu Fig. 7 zeigt, weist der Stift 65 and einem Ende einen Abschnitt 70 mit einem grösseren Durchmesser auf und ist am anderen Ende des Stiftes auf denselben ein Sicherungsring 71 aufgesetzt. Dabei ist zwischen den Abschnitt 70 des Stiftes 65 und den Hebel 23 sowie zwischen den Hebel 22 und den Sicherungsring 71 je eine auf den Stift aufgeschobene Beilagescheibe 72 und 73 zwischengefügt, um ein günstiges Reibungsverhalten zu erreichen.

Aufgrund der Ausbildung der Schlitze mit dem vorstehend erläuterten kreisevolventenförmigen Verlauf ist erreicht, dass zwischen dem Stift 65 und jedem der beiden Schlitze 44 bzw. 45 stets solche einander entsprechende Kräfteverhältnisse vorliegen, dass die Schlitze 44 und 45 beim Verschwenken der Hebel 22 und 23 den Stift 65 stets entlang der genannten Tangente 67 mitnehmen. Dies heisst mit anderen Worten, dass die die Schlitze aufweisenden Hebel 22 und 23 als Mitnehmereinrichtung für den Kulissenstein denselben stets genau entlang der durch die Tangente 67 vorgegebenen geradlinigen Bewegungsbahn mitnehmen und führen. Durch die geradlinige Bewegungsbahn des als Kulissenstein vorgesehenen Stiftes 65 und durch den kreisevolventenförmigen Verlauf der als Kulissenfläche vorgesehenen Schlitze 44 und 45 ist eine solche Abstimmung der Schwenkbewegungen der beiden Hebel 22 und 23 erreicht, dass die beiden über die Kulissensteuerung 40 miteinandergekoppelten Hebel bei deren Verschwenken je eine gleichförmige, einer gegenseitigen Abrollbewegung der beiden Grundkreise $C_1$ und $C_2$ der Kreisevolventen $E_1$ und $E_2$ entsprechende Schwenkbewegung ausführen. Zusätzlich ist durch die Wahl der Bewegungsbahn des Kulissensteines und der Verläufe der als Kulissenfläche vorgesehenen Schlitze erreicht, dass beim Verschwenken der beiden Hebel die zwischen dem Kulissenstein und den Schlitzen auftretenden Kräfte stets senkrecht zu den Begrenzungswänden der Schlitze ausgerichtet sind, so dass stets eine einwandfreie und störungsfreie Kraftübertragung über die Kulissensteuerung sichergestellt ist. Auf diese Weise ist auch bei diesem Gerät für eine genau aufeinander abgestimmte Verstellung der beiden Hebel 22 und 23 der Bandführungseinrichtung 18 gesorgt, so dass ein sicheres, gleichmässiges und schonendes Mitnehmen des Bandes 1 durch die Bandführungen 31 und 32 sichergestellt ist und auch gewährleistet ist, dass die beiden Hebel stets zugleich ihre Betriebslage bzw. ihre Ruhelage erreichen. Dadurch, dass die beiden Hebel zugleich als Mitnehmereinrichtung für den Kulissenstein wirksam sind, erübrigt sich eine separate Mitnehmereinrichtung, was im Hinblick auf eine einfache und raumsparende Ausbildung vorteilhaft ist. Da der Kulissenstein auch hier gegenüber zwei in je einem Hebel angebrachten Schlitzen eine räumlich kurze Relativbewegung ausführt, sind die Schlitze selbst auch kurz ausgebildet, so dass die Hebel einen kompakten Aufbau aufweisen und wenig Raum in Anspruch nehmen.

Bei dem Gerät gemäss Fig. 8 weist die zur Kopplung der beiden Hebel 22 und 23 vorgesehene Kulissensteuerung 40 an jedem Hebel eine Kulissenfläche auf, die hierbei in besonders einfacher Weise je an einer Seitenwand 74 bzw. 75 des betreffenden Hebels 22 bzw. 23 ausgebildet ist. Die beiden Seitenwände 74 und 75 weisen dabei je einen Kreisbogenförmigen Verlauf auf. Der Kulissenstein 76 der Kulissensteuerung 40 weist bei diesem Gerät zum Zusammenwirken mit jeder als Kulissenfläche dienenden Seitenwand 74 bzw. 75 eine drehbare Rolle 77 bzw. 78 auf, wie die Fig. 9 deutlich zeigt. Die beiden Rollen 77 und 78 sind hierbei mit Hilfe von zwei Sicherungsringen 79 und 80 auf einer gemeinsamen Achse 81 drehbar gehalten. Die Achse 81 ist in ihrem Mittenbereich in einem um eine Schwenkachse 42 schwenkbaren Arm 43 unverdrehbar festgehalten, wobei die Achse 81 den Arm 43 durchsetzt und zwischen den Arm 43 und jeder der beiden Rollen 77 bzw. 78 eine Beilagscheibe 82 bzw. 83 auf die Achse 81 aufgeschoben ist.

Der Arm 43 bildet hier wieder die Mitnehmereinrichtung für den Kulissenstein 76, die denselben genau und sicher entlang einer vorgegebenen Bewegungsbahn, nämlich einer Kreisbahn, führt. Wie auch aus Fig. 9 ersichtlich ist, liegt der Arm 43 in Richtung der Schwenkachsen 20 und 21 gesehen zwischen den beiden Hebeln 22 und 23. Der Kulissenstein 76 durchsetzt mit seiner Achse 81, wie bereits vorstehend erwähnt, den Arm 43 und greift mit jeder an seinen beiden freien Enden vorgesehenen, um die Achsen 81 drehbaren Rollen 77 bzw. 78 an einer der beiden als Kulissenflächen vorgesehenen Seitenwände 74 bzw. 75 der beiden Hebel kraftschlüssig an, so dass bezüglich des Armes praktisch symmetrische Kräfteverhältnisse vorliegen.

Zum Antreiben der beiden über die Kulissensteuerung 40 miteinander gekoppelten Hebel 22 und 23 weist die motorische Antriebseinrichtung 46 einen Motor 47 auf, der über eine Überlastkupplung und die selbsthemmende Antriebsverbindung 48 ein auf die Schwenkachse 42 des Armes 43 aufgesetztes Zahnrad 84 antreibt. Zum Stillsetzen des Motors 47, wenn die beiden Hebel 22 und 23 jeweils ihre Betriebslage bzw. ihre Ruhelage erreicht haben, können beispielsweise in Analogie zur entsprechenden Konstruktion beim Gerät gemäss den Figuren 1 und 2 zwei Endlagenschalter vorgesehen sein, die mit einem am Zahnrad 84 vorgesehenen Ansatz zusammenwirken. Auch können zwei mit dem Arm 43 zusammenwirkende Endlagenschalter vorgesehen sein.

Wenn das Zahnrad 84 entgegen dem Uhrzeigersinn angetrieben wird, dann wird der Arm 43 ebenfalls entgegen dem Uhrzeigersinn verschwenkt, wobei derselbe den Kulissenstein 76 entlang einer Kreisbahn mitnimmt und führt. Über die beiden Rollen 77 und 78 des Kulissensteines die an den Seitenwänden 74 und 75 der beiden Hebel kraftschlüssig angreifen, werden dabei auch die beiden Hebel 22 und 23 mitverstellt, wobei dieselben von ihrer Ruhelage verschwenkt werden. Hierbei rollen die beiden Rollen 77 und 78 mit zueinander entgegengesetzten Drehrichtungen an den Seitenwänden 74 und 75 der beiden Hebel ab, was im Hinblick auf einen geringen Reibungswiderstand der Kulissensteuerung und damit auch eine leichtgängige Verstellbarkeit der beiden Hebel von Vorteil ist. Das Verschwenken der beiden Hebel erfolgt aufgrund der Kopplung mittels der Kulissensteuerung in genau aufeinander abgestimmter Weise. Durch die bei diesem Gerät erfolgte Wahl der Bewegungsbahn des Kulissensteines und des Verlaufes jeder der beiden als Kulissenflächen vorgesehenen Seitenwände ist die Abstimmung der Schwenkbewegungen der beiden Hebel so getroffen, dass beim Verschwenken von der Ruhelage in die Betriebslage am Beginn dieses Verschwenkens der Hebel 23 etwas schneller verstellt wird als der Hebel 22, so dass der Hebel 23 gegenüber dem Hebel 22 geringfügig voreilt, und gegen Ende dieses Verschwenkens der Hebels 23 etwas langsamer verstellt wird als der Hebel 22, so dass der Hebel 22 gegenüber dem Hebel 23 wiederum nacheilt, wobei am Ende dieses Verschwenkens beide Hebel 22 und 23 zugleich ihre Betriebslage einnehmen. Bei diesem Verschwenken der Hebel 22 und 23 von ihrer Ruhelage in ihre Betriebslage wird das Band 1 wieder auf einwandfreie und schonende Weise von den Bandführungen 31 und 32 aus der Kassette 10 herausgeführt und mitgenommen und nach Erreichen der Betriebslage der beiden Hebel sicher um die Bandführungstrommel 2 herumgeschlungen gehalten.

Um die Hebel 22 und 23 wieder von ihrer Betriebslage in ihre Ruhelage zurückzuverstellen, wird das Zahnrad 84 im Uhrzeigersinn angetrieben, was ein Verschwenken des Armes 43 im Uhrzeigersinn zur Folge hat. Der Arm 43 trägt einen denselben durchsetzten Stift 85, der mit seinen beiden freien Enden an den Seitenwänden 86 und 87 der beiden Hebel 22 und 23 kraftschlüssig angreift, wenn der Arm im Uhrzeigersinn verschwenkt wird. Hierdurch werden die beiden Hebel 22 und 23 über den an den Seitenwänden 86 und 87 derselben angreifenden, vom Arm 43 mitgenommenen Stift 85 von ihrer Betriebslage in ihre Ruhelage zurückverstellt.

Wie ersichtlich, ist auch beim Gerät gemäss Fig. 8 ein genau aufeinander abgestimmtes Verschwenken der beiden Hebel und damit ein einwandfreies und schonendes Herausführen des Bandes aus der Kassette und ein sicheres Herumschlingen desselben um die Bandführungstrommel erreicht. Da die Seitenwände der Hebel zugleich als Kulissenflächen ausgenützt sind, ergibt sich eine sehr einfache und stabile Ausbildung der Hebel. Durch das Abrollen des Kulissensteines an den betreffenden Kulissenflächen ist ein besonders günstiges Reibungsverhalten der Kulissensteuerung erreicht, was im Hinblick auf eine leichtgängige Verstellbarkeit vorteilhaft ist. Dadurch, dass die beiden Rollen des Kulissensteines zu beiden Seiten des Armes liegen, ergeben sich beim Zusammenwirken des Kulissensteines mit den Hebeln symmetrische Kräfteverhältnisse, so dass der Arm und dessen Schwenklager keiner Torsionsbelastung ausgesetzt sind. Es sei noch erwähnt, dass die beiden Rollen des Kulissensteines auch je auf einer separaten Achse drehbar gelagert sein können, wobei die beiden separaten Achsen auch nicht koaxial zueinander angeordnet sein können. Auch können gegebenenfalls die beiden Rollen des Kulissensteines unterschiedlich grosse Durchmesser aufweisen.

Wie aus den vorstehend beschriebenen Ausführungsbeispielen hervorgeht, sind durch entsprechende Wahl der Bewegungsbahnen der Kulissensteine und der Verläufe des Kulissenflächen eine Reihe von unterschiedlichen Abstimmungen der Schwenkbewegungen der beiden Hebel aufeinander erreicht. Selbstverständlich sind auch noch andere beliebige Abstimmungen möglich, beispielsweise so, dass ein Hebel in einer Bewegungsphase beschleunigt wird, während dessen der andere Hebel sich gleichförmig bewegt oder verlangsamt wird.

**Patentansprüche**

1. Aufzeichnungs- und/oder Wiedergabegerät für einen bandförmigen Aufzeichnungsträger, der in einer Kassette untergebracht ist, die mindestens eine Öffnung zum Herausführen des Aufzeichnungsträgers aus derselben aufweist und die in das Gerät einsetzbar ist, das mit einer Bandführungstrommel, um deren Mantelfläche der aus der Kassette herausgeführte Aufzeichnungsträger zumindest teilweise schlingbar ist, und mit einer zum Herausführen des Aufzeichnungsträgers aus der Kassette und zum Herumschlingen desselben um die Bandführungstrommel vorgesehenen Bandführungseinrichtung versehen ist, die zwei um zueinander parallele Schwenkachsen verschwenkbar gelagerte, sich in einem entsprechend ihrem Verschwenken sich ändernden Überdeckungsgebiet überdeckende Hebel aufweist, die je mindestens eine zum Zusammenwirken mit dem Aufzeichnungsträger vorgesehene Bandführung tragen und die von einer Antriebseinrichtung her zwischen einer Ruhelage, in der die Bandführungen den in der Kassette untergebrachten Aufzeichnungsträger im Bereich von deren Öffnung hintergreifen, und einer Betriebslage, in der die Bandführungen den beim Verschwenken der Hebel von ihrer Ruhelage in ihre Betriebslage mitgenommenen Aufzeichnungsträger um die Bandführungstrommel herumgeschlungen halten, verschwenkbar sind und die zum Abstimmen ihrer Schwenkbewegungen aufeinander über eine unmittelbar an denselben angreifende Kopplungseinrichtung miteinander gekoppelt sind, dadurch gekennzeichnet, dass die Kopplungseinrichtung durch eine Kulissensteuerung (40) gebildet ist, die einen in Richtung der Schwenkachsen (20, 21) der beiden Hebel (22, 23) verlaufenden, im Bereich des jeweiligen Überdeckungsgebietes der beiden Hebel an denselben kraftschlüssig angreifenden Kulissenstein (61 ; 64 ; 65 ; 76) aufweist, mit dem eine quer zu den Schwenkachsen verstellbare Mitnehmereinrichtung (43 ; 59 ; 22, 23) kraftschlüssig zusamenwirkt, die ihn entlang einer durch das jeweilige Überdeckungsgebiet der beiden Hebel verlaufenden, von der Mitnehmereinrichtung festgelegten Bewegungsbahn mitnimmt, wobei das kraftschlüssige Angreifen des Kulissensteines (41 ; 64 ; 65 ; 76) an mindestens einem der beiden Hebel (22, 23) über eine an diesem Hebel vorgesehene, im Bereich des jeweiligen Überdeckungsgebietes verlaufende, zur Bewegungsbahn des Kulissensteines korrespondierende Kulissenfläche (44 ; 45 ; 74 ; 75) erfolgt, an der er, sich an derselben entlang bewegend, anliegend gehalten ist.

2. Gerät nach Anspruch 1, dadurch gekennzeichnet, dass die Mitnehmereinrichtung für den Kulissenstein (41 ; 76) durch ein gegenüber den beiden Hebeln (22, 23) verstellbares separates Stellglied (43 ; 59) gebildet ist, dass jeder der beiden Hebel (22, 23) eine Kulissenfläche (44, 45 ; 74, 75) aufweist, die sich im Bereich des jeweiligen Überdeckungsgebietes der beiden Hebel ebenfalls überdecken, und dass der Kulissenstein (41 ; 76) im Bereich dieses Überdeckungsgebietes an den beiden Kulissenflächen (44, 45 ; 74, 75) kraftschlüssig angreift.

3. Gerät nach Anspruch 2, dadurch gekennzeichnet, dass das separate Stellglied für den Kulissenstein (41 ; 76) durch einen verschwenkbar gelagerten Arm (43) gebildet ist.

4. Gerät nach Anspruch 3, dadurch gekennzeichnet, dass der Arm (43) in Richtung der Schwenkachsen (20, 21) gesehen zwischen den beiden Hebeln (22, 23) liegt und dass der Kulissenstein (41 ; 76) den Arm durchsetzt und mit jedem seiner beiden freien Enden an einer der beiden Kulissenflächen (44, 45 ; 74, 75) kraftschlüssig angreift.

5. Gerät nach Anspruch 2, dadurch gekennzeichnet, dass das separate Stellglied für den Kulissenstein (41) durch einen entlang einer Führung (60) verschiebbaren Gleitteil (59) gebildet ist.

6. Gerät nach Anspruch 1, dadurch gekennzeichnet, dass die Mitnehmereinrichtung für den Kulissenstein (64) durch einen (23) der beiden Hebel gebildet ist und der andere (22) der beiden Hebel die Kulissenfläche (44) aufweist, an welcher der Kulissenstein (64) kraftschlüssig angreift.

7. Gerät nach einem der Ansprüche 1 bis 6, dadurch gekennzeichnet, dass die Kulissenfläche an einer Seitenwand (74, 75) des betreffenden Hebels (22, 23) ausgebildet ist.

8. Gerät nach einem der Ansprüche 1 bis 6, dadurch gekennzeichnet, dass die Kulissenfläche durch einen in dem betreffenden Hebel (22, 23) vorgesehenen Schlitz (44, 45) gebildet ist, durch den der Kulissenstein (44 ; 64 ; 65) hindurchgeführt ist.

9. Gerät nach Anspruch 1, dadurch gekennzeichnet, dass die Mitnehmereinrichtung für den Kulissenstein (65) durch beide Hebel (22, 23) gebildet ist, die beide zur Bildung je einer Kulissenfläche einen Schlitz (44, 45) aufweisen, und dass sich die beide Schlitze im jeweiligen Überdeckungsgebiet der beiden Hebel ebenfalls überdecken und in diesem Überdeckungsgebiet den Kulissenstein schwimmend aufnehmen, wobei der Verlauf jedes Schlitzes im wesentlichen einem Abschnitt einer Kreisevolvente ($E_1$, $E_2$) entspricht, deren Grundkreis ($C_1$, $C_2$) zentrisch zu der Schwenkachse (20, 21) des betreffenden Hebels (22, 23) liegt, und sich die beiden Grundkreise in einer senkrecht zu der durch die beiden Schwenkachsen hindurchgehenden Ebene (66) verlaufenden Tangente (67) berühren und das Verhältnis ihrer Durchmesser ($D_1$, $D_2$) umgekehrt proportional zum Verhältnis der Schwenkwinkel ($B_1$, $B_2$) der beiden Hebel (22, 23) gewählt ist.

10. Gerät nach einem der Ansprüche 1 bis 9, dadurch gekennzeichnet, dass der Kulissenstein durch einen zylindrischen Stift (41 ; 65) gebildet ist.

11. Gerät nach einem der Ansprüche 1 bis 9, dadurch gekennzeichnet, dass der Kulissenstein zum Zusammenwirken mit mindestens einer Kulissenfläche (44 ; 74, 75) eine drehbare Rolle (64 ; 77, 78) aufweist.

**Claims**

1. A recording and/or reproducing apparatus for use in conjunction with a record carrier in form of a tape contained in a cassette which has at least one aperture for withdrawing the record carrier from said cassette and which can be inserted into the apparatus, which apparatus comprises a tape-guide drum around whose circumferential surface the record carrier which has been withdrawn from the cassette can be wrapped at least partly and a tape-guide device for withdrawing the record carrier from the cassette and werapping it around the tapeguide drum, which tape-guide device comprises two levers which are pivotable about two parallel pivotal axes, which overlap each other in an area of overlap which varies as they are pivoted, which each carry at least one tape guide which is adapted to cooperate with the record carrier, which can be pivoted by means of a driving device, between a rest position, in which the tape guides engage behind the record carrier in the cassette at the location of the aperture in said cassette, and an operating position, in which the tape guides keep the record carrier, which is taken along when the levers are pivoted from their rest positions to their operating positions, wrapped around the tape-guide drum and which are coupled to each other via a coupling device which acts directly on said levers for coordinating their pivotal movements, characterized in that the coupling device comprises a link-motion mechanism (40) which comprises a sliding block (61 ; 64 ; 65 ; 76) which extends in the same direction as the pivotal axes (20, 21) of the two levers (22, 23), which is in force-sustained engagement with the two levers at the location of their instantaneous area of overlap, and which is in force-sustained cooperation with a carrier device (43 ; 50 ; 22, 23) which is movable transversely of the pivotal axes, which moves said sliding block along a path of movement which is defined by the carrier device and which extends through the instantaneous area of overlap of the two levers, the force-sustained engagement of the sliding block (41 ; 64 ; 65 ; 76) with at least one of the two levers (22, 23) being obtained via a link-motion surface (44 ; 45 ; 74 ; 75) on said at least one lever, which surface extends within the instantaneous area of overlap are corresponds to the path of movement of the sliding block, the sliding block being urged against the link-motion surface as it moves along said surface.

2. An apparatus as claimed in Claim 1, characterized in that the carrier device for the sliding block (41 ; 76) is a separate actuating member (43 ; 59) which is movable relative to the two levers (22, 23), each of the two levers comprises a link-motion surface (44, 45 ; 74, 75), which surfaces also overlap each other at the location of the instantaneous area of overlap of the two levers, and the sliding block (41 ; 76) is in force-sustained engagement with the two link-motion surfaces (44, 45 ; 74, 75) at the location of said area of overlap.

3. An apparatus as claimed in Claim 2, characterized in that the separate actuating member for the sliding block (41 ; 76) is a pivotally journalled arm (43).

4. An apparatus as claimed in Claim 3, characterized in that viewed along the pivotal axes (20, 21) the arm (43) is situated between the two levers (22, 23) and the sliding block (41 ; 76) extends through the arm and each of its two free ends is in force-sustained engagement with one of the two link-motion surfaces (44, 45 ; 74, 75).

5. An apparatus as claimed in Claim 2, characterized in that the separate actuating element for the sliding block (41) is a sliding member (59) which is slidable along a guide (60).

6. An apparatus as claimed in Claim 1, characterized in that the carrier device for the sliding block (64) is formed byh one (23) of the two levers and the other one (22) of the two levers comprises the link-motion surface (44) with which the sliding block (64) is in force-sustained engagement.

7. An apparatus as claimed in any one of the Claims 1 to 6, characterized in that the link-motion surface is formed on a side wall (74, 75) of the relevant lever (22, 23).

8. An apparatus as claimed in any one of the Claims 1 to 6, characterized in that the link-motion surface is formed by a slot (44, 45) in the relevant lever (22, 23) through which slot the sliding block (44 ; 64, 65) extends.

9. An apparatus as claimed in Claim 1, characterized in that the carrier device for the sliding block (65) is formed by both levers (22, 23), which each have a slot (44, 45) for the formation of a link-motion surface, the two slots also overlap each other in the instantaneous area of overlap of the two levers, and the sliding block floats in said slots in said area of overlap, the shape of each slot substantially corresponding to a portion of a circular involute ($E_1$, $E_2$), whose base circle ($C_1$, $C_2$) is centred relative to the pivotal axis (20, 21) of the relevant lever (22, 23), the two base circles being tangent to each other in accordance with the tangent line (67) which extends perpendicularly to the plane (66) containing the two pivotal axes, and the ratio of the diameters ($D_1$, $D_2$) of said two base circles being inversely proportional to the ratio of the pivotaing angles ($\beta_1$, $\beta_2$) of the two levers (22, 23).

10. An apparatus as claimed in any one of the Claims 1 to 9, characterized in that the sliding block is a cylindrical pin (41 ; 65).

11. An apparatus as claimed in any one of the Claims 1 to 9, characterized in that the sliding block comprises a rotatable roller (64 ; 77, 78) which is adapted to cooperate with at least one link-motion surface (44 ; 74, 75).

## Revendications

1. Appareil d'enregistrement et/ou de reproduction pour un support d'enregistrement en forme de bande, logé dans une cassette, qui comporte au moins une ouverture pour en retirer le support d'enregistrement et qui peut être introduite dans l'appareil, cet appareil comprenant un tambour de guidage de bande autour de la surface circonférentielle duquel le support d'enregistrement qui a été retiré de la cassette peut être appliqué au moins partiellement et un dispositif guide-bande prévu pour retirer le support d'enregistrement de la cassette et l'appliquer autour du tambour de guidage de bande, ce dispositif guide-bande comprenant deux leviers qui peuvent pivoter autour d'axes de pivotement parallèles, qui se chevauchent dans une zone de chevauchement variant en fonction de leur pivotement, qui portent chacun au moins un organe de guidage de bande prévu pour coopérer avec le support d'enregistrement et qui peuvent pivoter, à l'intervention d'un dispositif d'entraînement, entre une position de repos, dans laquelle les organes de guidage de bande sont placés derrière le support d'enregistrement logé dans la cassette, dans la zone de l'ouverture de celle-ci, et une position de travail, dans laquelle les organes de guidage de bande maintiennent le support d'enregistrement, emmené lorsque les leviers pivotent de leur position de repos vers leur position de travail, appliqué autour du tambour de guidage de bande, et qui sont accouplés l'un à l'autre par l'intermédiaire d'un dispositif d'accouplement qui agit directement sur les leviers pour coordonner leurs mouvements de pivotement, caractérisé en ce que le dispositif d'accouplement est formé par un mécanisme à coulisse (40) qui comprend un coulisseau (41 ; 64 ; 65 ; 76) qui s'étend dans le même sens que les axes de pivotement (20, 21) des deux leviers (22, 23), qui est en prise à transfert de force avec les deux leviers dans la zone de chevauchement instantané et qui coopère à transfert de force avec un dispositif entraîneur (43 ; 54 ; 22, 23) qui est mobile transversalement aux axes de pivotement, qui déplace le coulisseau suivant un trajet défini par le dispositif entraîneur et passant par la zone de chevauchement instantané des deux leviers, l'engagement à transfert de force du coulisseau (41 ; 64 ; 65 ; 76) avec au moins un des deux leviers (22, 23) étant obtenu par l'intermédiaire d'une surface de coulisse (44 ; 45 ; 74 ; 75) prévue sur ce levier, cette surface s'étendant dans la zone de chevauchement instantané et correspondant au trajet du coulisseau qui est maintenu contre les surfaces de coulisse lorsqu'il se déplace le long de ladite surface.

2. Appareil suivant la revendication 1, caractérisé en ce que le dispositif entraîneur pour le coulisseau (41 ; 76) est formé par un organe d'actionnement séparé (43 ; 57) qui est mobile par rapport aux deux leviers (22, 23), que chacun des deux leviers (22, 23) comporte une surface de coulisse (44, 45 ; 74, 75), ces surfaces se chevauchant également dans la zone de chevauchement instantané des deux leviers, et que le coulisseau (41 ; 76) est en contact à transfert de force avec les deux surfaces de coulisse (44, 45 ; 74, 75) dans cette zone de chevauchement.

3. Appareil suivant la revendication 2, caractérisé en ce que l'organe d'actionnement séparé pour le coulisseau (41 ; 76) est formé par un bras (43) monté pivotant.

4. Appareil suivant la revendication 3, caractérisé en ce que le bras (43), vu dans le sens des axes de pivotement (20, 21), est situé entre les deux leviers (22, 23) et que le coulisseau (41 ; 76) traverse le bras et est en contact à transfert de force, par chacune de ses deux extrémités libres, avec une des deux surfaces de coulisse (44, 45 ; 74, 75).

5. Appareil suivant la revendication 2, caractérisé en ce que l'organe d'actionnement séparé pour le coulisseau (41) est formé par un élément coulissant (59) qui est mobile le long d'un guide (60).

6. Appareil suivant la revendication 1, caractérisé en ce que le dispositif entraîneur pour le coulisseau (64) est formé par un des deux leviers (23) et l'autre des deux leviers (22) présente la surface de coulisse (44) avec laquelle le coulisseau (64) est en contact à transfert de force.

7. Appareil suivant l'une quelconque des revendications 1 à 6, caractérisé en ce que la surface de coulisse est formée sur une paroi latérale (74, 75) du levier (22, 23) en question.

8. Appareil suivant l'une quelconque des revendications 1 à 6, caractérisé en ce que la surface de coulisse est formée par une boutonnière (44, 45) prévue dans le levier (22, 23) en question, le coulisseau (44 ; 64 ; 65) traversant cette boutonnière.

9. Appareil suivant la revendication 1, caractérisé en ce que le dispositif entraîneur pour le coulisseau (65) est formé par les deux leviers (22, 23) qui comportent chacun une boutonnière (44, 45) destinée à former une surface de coulisse, et que les deux boutonnières se chevauchent également dans la zone de chevauchement instantané des deux leviers et reçoivent le coulisseau flottant dans cette zone de chevauchement, l'allure de chaque boutonnière correspondant en substance à une partie d'une développante de cercle ($E_1$, $E_2$) dont le cercle de base ($C_1$, $C_2$) est centré sur l'axe de pivotement (20, 21) du levier (22, 23) en question, les deux cercles de base se touchant suivant une tangente (67) qui s'étend perpendiculairement au plan (66) passant par les deux axes de pivotement et le rapport des diamètres ($D_1$, $D_2$) des deux cercles étant choisi inversement proportionnel au rapport des angles de pivotement ($B_1$, $B_2$) des deux leviers (22, 23).

10. Appareil suivant l'une quelconque des revendications 1 à 9, caractérisé en ce que le coulisseau est formé par un doigt cylindrique (41 ; 65).

11. Appareil suivant l'une quelconque des revendications 1 à 9, caractérisé en ce que le coulisseau comprend un galet tournant (64 ; 77, 78) destiné à coopérer avec au moins une surface de coulisse (44 ; 74, 75).

Fig.1

Fig.2

Fig.3

Fig.4

Fig5

Fig.6

Fig.7

4

Fig.8

Fig.9